# EUROPEAN PATENT SPECIFICATION

(11) **EP 0 619 033 B1**
(45) Date of publication and mention of the grant of the patent: **17.09.1997**
(21) Application number: 93900356.2
(22) Date of filing: 23.12.1992
(51) Int. Cl.: G03B 15/05, H05B 37/02

(54) **CONTROLLER FOR PHOTOGRAPHIC LIGHTING**
STEUERGERÄT FÜR PHOTOGRAPHISCHE BELEUCHTUNG
UNITE DE COMMANDE DESTINEE A UN SYSTEME D'ECLAIRAGE PHOTOGRAPHIQUE

(30) Priority: 24.12.1991 GB 9127380
(43) Date of publication of application: 12.10.1994
(73) Proprietor: LIU, Sam, Kwun Tong, Kowloon, Hong Kong (HK)
(72) Inventor: LIU, Sam, Kwun Tong, Kowloon, Hong Kong (HK)
(74) Representative: Luckhurst, Anthony Henry William
(86) International application number: GB9202386
(87) International publication number: WO9313453

(56) References cited:
- FR-A- 2 643 134
- US-A- 5 016 037
- GENERAL RADIO EXPERIMENTER vol. 44, no. 7-9, July 1970, CONCORD US pages 15 - 17 'NEW SHOES FOR AN OLD WORKHORSE'
- ELEKTOR ELECTRONICS vol. 5, no. 11, November 1979, CANTERBURY,GB pages 14 - 15 'flash sequencer'

## Description

The invention relates to controllers for photographic lighting.

For normal photography fairly simple illumination may be required from time to time to enhance or make it possible to take a picture satisfactorily. For more complex situations, a photographer may require especial lighting to show one side of an object more brightly than another, to take a number of related sequence pictures or to expose the same film frame a number of times and so on.

At the present time operation of lighting arrangements have generally or always to be carried out "by hand", often requiring the photographer to employ assistants or take a great deal of time for each picture. Further, conventional flash lamps requires re-charging periods of say one to five seconds between each flash, and this has to be catered for. This may represent a special problem for "location" pictures as the photographers will transport only relatively small capacity or small output lamps and will need to flash them twice or several times for each exposure so that the film is exposed to sufficient light.

Earlier proposals for controllers are disclosed in EP-A-5016037, where two modes of operation are provided using a microprocessor, and in "General Radio Experimenter" Vol. 44, No. 7-9, July 1970, pages 15-17 and "Elektor Electronics" Vol. 5, No.11, November 1979, pages 14-15, where sequence modes of flashing lamps are disclosed.

According to the invention there is provided a controller for photographic lighting comprising a housing and being arranged to provide a plurality of output signals at output sockets provided in the housing for initiating operation of a number of different flash lamps, the controller further comprising a microcomputer incorporated within the housing and programmed to provide the output signals to cause a number of lamps to be turned on automatically and selectively according to at least two modes to illuminate an object to be photographed characterised in that in the first mode the lamps are turned on together a number of times but not necessarily all the lamps are turned on the same number of times, and in the second mode the lamps are turned on sequentially with an equal time interval between the turning on of the lamps in the sequence, and in that the controller further comprises manually operable buttons mounted to the housing for selecting the number, sequence and relative timing of the output signals.

The microcomputer may be programmed to provide a third mode in which the lamps are turned on sequentially with at least some of the time intervals between the lamps being different.

The controller is preferably arranged to respond to camera operating signals for synchronising automatically the operation of the camera and the turning on of the lamps.

A controller according to the invention will now be described by way of example with reference to the accompanying drawings in which:
Figure 1 is an isometric view of the front of the controller;
Figure 2 is an elevation of a rear of the controller;
Figure 3 is a flow diagram for setting a mode of operation of the controller;
Figure 4 is a flow diagram of a mode 1 operation;

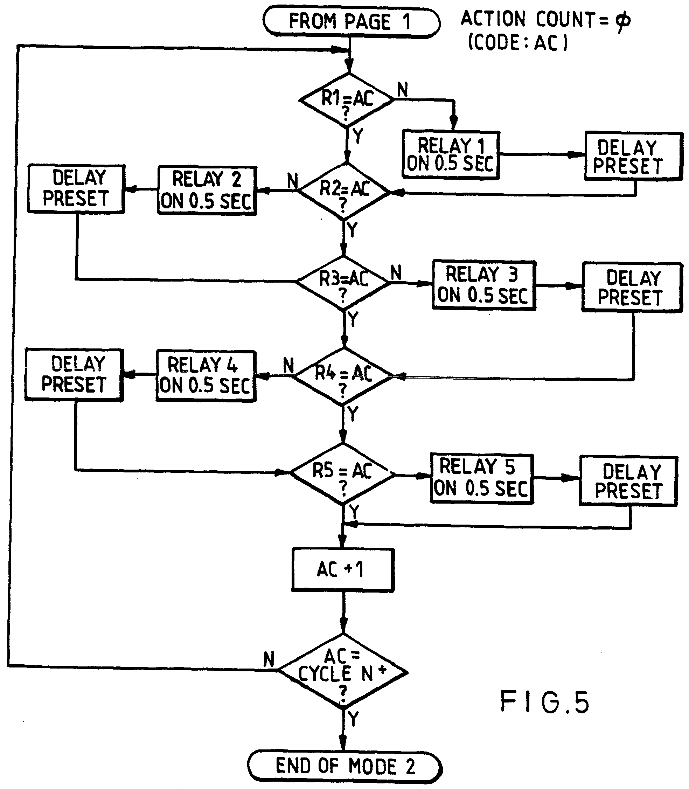

Figure 5 is a flow diagram of a mode 2 operation; and

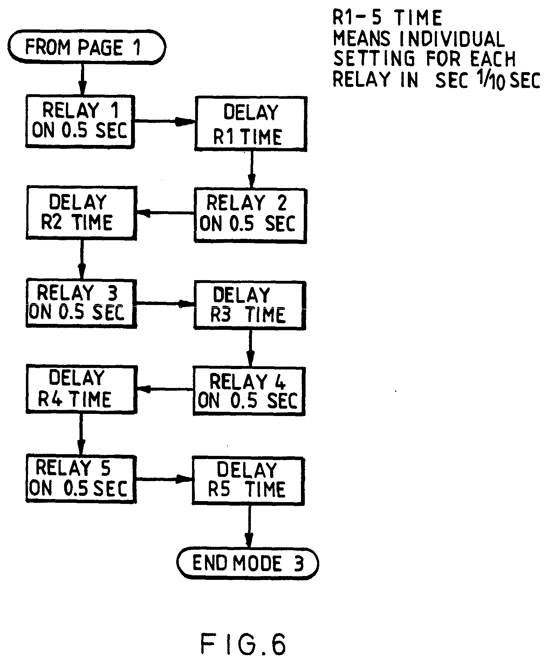

Figure 6 is a flow diagram of a mode 3 operation; and
Figure 7 is a schematic circuit of the controller.

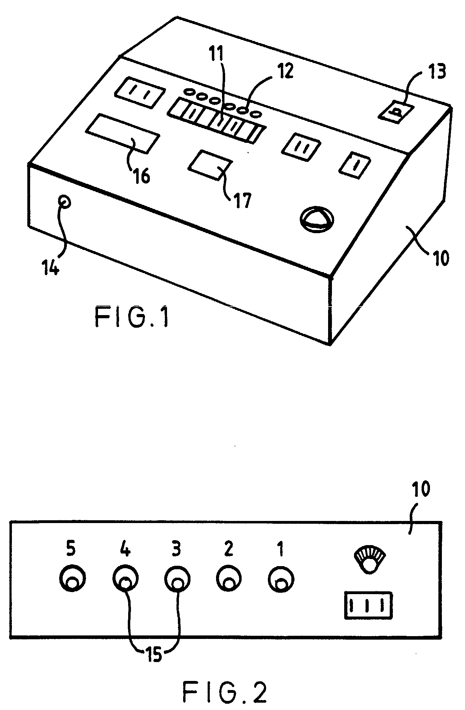

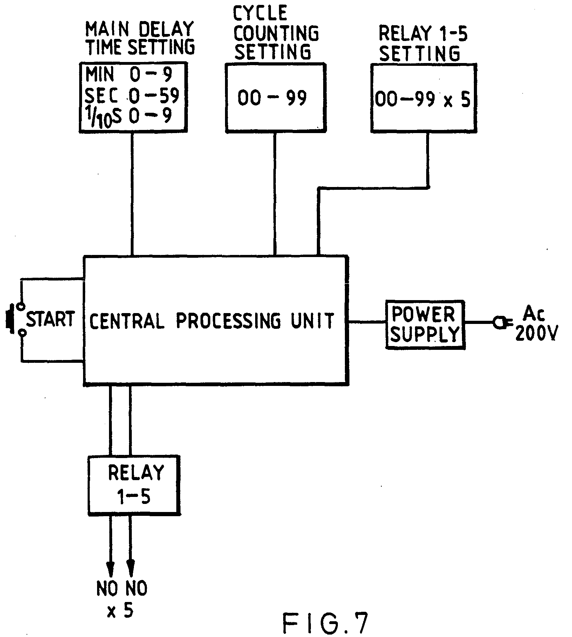

Referring to the drawing, in Figures 1 and 2 a housing 10 is provided with a number of five control buttons 11, five display lamps 12 and a start button 13. A socket 14 is provided for connecting the controller to a camera so that the camera can be operated automatically, under control of the controller, in synchronism with operation of flash lamps. Five outlet sockets 15 are provided (see Figure 2), which correspond respectively to the lamps 12, for connecting the controller output signals to five different flash lamp drive circuits (not shown). The housing 10 contains electrical circuits (see Figure 7) and a microcomputer programmed to provide the various output signals as required to control the camera and the operation of up to five flash lamps. The output signals are in practice arranged to close respective relays in the housing so as to initiate the operation of the lamp and camera, as required. The flash lamp drive circuits and camera are connected by electrical cables (not shown) to the sockets 15 and 14 respectively.

The controller also has a display 16 and 17 to respectively display the time interval set between each operation of the lamps and the number of cycles remaining in each sequence of operation of the controller. The control buttons 11 can be set to any number from 0 to 99 and are used in Mode 1 and 2 (see below) to set the number of times the respective lamps flash in each cycle. In Mode 3 the buttons 11 are used to set the interval, or time from the start of a sequence, between each operation of the lamps.

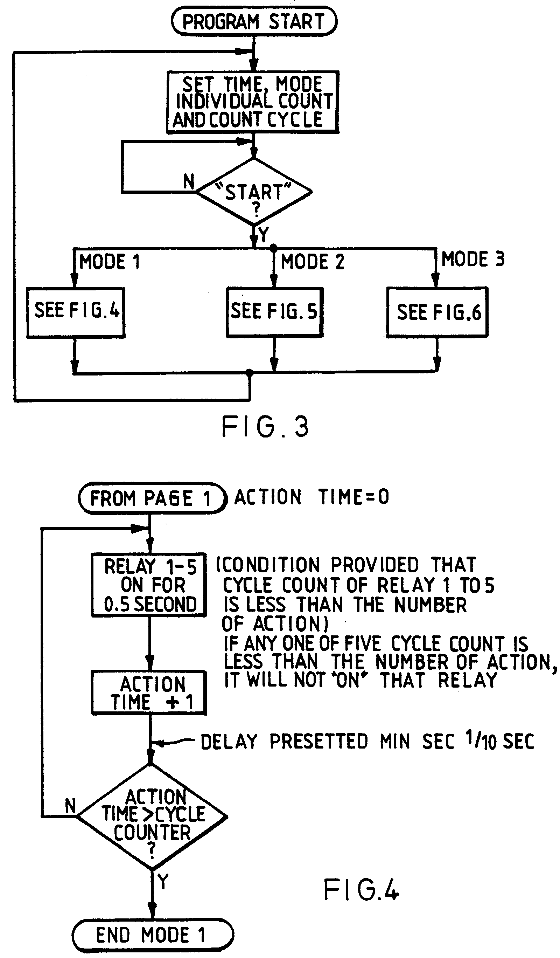

In Figure 3, a sequence for selecting one of three possible modes is shown. These modes have been chosen as offering the most likely three types of requirements for a professional photographer.

In mode 1, outputs can be provided at each or selected ones of the five outputs, with a re-cycle facility. Thus, after possibly an initial chosen delay from a start, selected flash lamps, corresponding to the five outputs, will be turned on. The same lamps or some of the lamps will be turned on again for each cycle thereafter. The intervals between cycles may be quite short (except this must not be less than the minimum re-charging time of any of the selected lamps) and can be set at up to 10 minutes.

In mode 2, the outputs signals are provided at the outputs in sequence. The delays between each lamp may be quite short, say five hundredth of a second, or up to ten minutes. The delays or intervals between each lamp are equal and the same sequence and same delays may be provided.

But similarly to Mode 1, some of the lamps may be turned on more times than others.

In mode 3, the output signals are provided in sequence and the intervals between each signal can be different. The sequence cannot be re-cycled automatically.

The controller enables a photographer to set up a number of lamps, in the described arrangement five lamps, to illuminate an object, or person, to be photographed. The photographer may flash each lamp separated, or together and measure the intensity of light produced in order to set the aperture stop and generally arrange his camera settings as required. Without the need thereafter to reach or touch the lamps or their own switches, the photograph can be taken by operation of the controller. Importantly, intervals can be set between the operation of each lamp and re-cycling of the lamp operation, as required, arranged. Thus careful and subtle illumination can be provided for each picture, and where only relatively small capacity lamps are available, each lamp, or selective some of the lamps, may be turned on several times for exposure of a single frame of a film.

It has been possible in the past to use automatic trigger switches to cause a number of flash lamps to operate at, or almost, the same time. Such switches are light sensitive so that if one lamp flashes, the others are automatically triggered to flash. However, it has not been possible to have a controllable interval and/or sequence between the flashes as now provided by the described controller.

## Claims

1. A controller for photographic lighting comprising a housing (1) and being arranged to provide a plurality of output signals at output sockets (15) provided in the housing for initiating operation of a number of different flash lamps, the controller further comprising a microcomputer incorporated within the housing and programmed to provide the output signals to cause a number of lamps to be turned on automatically and selectively according to at least two modes to illuminate an object to be photographed, characterised in that in the first mode the lamps are turned on together a number of times but not necessarily all the lamps are turned on the same number of times, and in the second mode the lamps are turned on sequentially with an equal time interval between the turning on of the lamps in the sequence, and in that the controller further comprises manually operable buttons (11) mounted to the housing for selecting the number, sequence and relative timing of the output signals.

2. A controller according to claim 1, characterised by the microcomputer being programmed to provide a third mode in which the lamps are turned on sequentially with at least some of the time intervals between the turning on of the lamps being different.

3. A controller according to claim 1 or 2, characterised in that the controller is arranged to respond to camera operating signals for synchonising automatically the operation of the camera and the turning on of the lamps.

## Patentansprüche

1. Steuergerät für photographische Beleuchtung mit einem Gehäuse (1), das derart gestaltet ist, daß es eine Vielzahl von Ausgangssignalen an in dem Gehäuse vorgesehenen Ausgangssockeln (15) zur Initiierung eines Betriebs einer Anzahl verschiedener Blitzleuchten liefert, wobei das Steuergerät weiterhin einen im Gehäuse untergebrachten Mikrocomputer aufweist, der derart programmiert ist, daß er die Ausgangssignale liefert, um zu bewirken, daß eine Anzahl von Leuchten automatisch eingeschaltet wird, und selektiv gemäß zumindest zwei Modi ein zu photographierendes Objekt beleuchtet, dadurch gekennzeichnet, daß im ersten Modus die Leuchten zusammen eine Anzahl von Malen eingeschaltet werden, aber nicht notwendigerweise alle Leuchten die gleiche Anzahl von Malen eingeschaltet werden, und daß im zweiten Modus die Leuchten sequentiell mit einem gleichen Zeitintervall zwischen dem Einschalten der Leuchten in der Sequenz eingeschaltet werden, und daß das Steuergerät weiterhin manuell betätigbare im Gehäuse angebrachte Knöpfe (11) zum Auswählen der Anzahl, Sequenz und des relativen Zeitablaufs der Ausgangssignale aufweist.

2. Steuergerät nach Anspruch 1, dadurch gekennzeichnet, daß der Mikrocomputer derart programmiert ist, daß er einen dritten Modus bietet, in dem die Leuchten sequentiell eingeschaltet werden, wobei zumindest einige der Zeitintervalle zwischen dem Einschalten der Leuchten verschieden sind.

3. Steuergerät nach Anspruch 1 oder 2, dadurch gekennzeichnet, daß das Steuergerät auf Kamera-Betätigungssignale zum automatischen Synchronisieren des Betriebs der Kamera und des Einschaltens der Leuchte reagiert.

## Revendications

1. Unité de commande d'un système d'éclairage photographique, comprenant un boîtier (1) et agencé de sorte à fournir plusieurs signaux de sortie au niveau de douilles de sortie (15) agencées dans le boîtier, pour initialiser l'actionnement d'un certain nombre de lampes éclairs différentes, l'unité de commande comprenant en outre un micro-ordinateur incorporé dans le boîtier et programmé de sorte à fournir les signaux de sortie pour entraîner l'allumage automatique et sélectif d'un certain nombre de lampes, selon au moins deux modes, pour éclairer un objet devant être photographié, caractérisé en ce que dans le premier mode les lampes sont allumées ensemble un certain nombre de fois, toutes les lampes n'étant toutefois pas forcément allumées le même nombre de fois, et que dans le deuxième mode, les lampes sont allumées séquentiellement avec un intervalle de temps égal entre l'allumage des lampes dans la séquence, et en ce que l'unité de commande comprend en outre des boutons à commande manuelle (11) montés sur le boîtier, pour sélectionner le nombre, la séquence et la synchronisation relative des signaux de sortie.

2. Unité de commande selon la revendication 1, caractérisée par un micro-ordinateur programmé de sorte à fournir un troisième mode, dans lequel les lampes sont allumées séquentiellement, au moins certains des intervalles de temps entre l'allumage des lampes étant différents.

3. Unité de commande selon les revendications 1 ou 2, caractérisée en ce que l'unité de commande est agencée de sorte à répondre à des signaux d'actionnement de l'appareil photographique pour synchroniser automatiquement l'actionnement de l'appareil photographique et l'allumage des lampes.
